# EUROPÄISCHE PATENTSCHRIFT

(11) **EP 4 162 590 B1**
(45) Veröffentlichungstag und Bekanntmachung des Hinweises auf die Patenterteilung: **04.03.2026**
(21) Anmeldenummer: 21726651.9
(22) Anmeldetag: 19.05.2021
(51) Int. Cl.: H02K 5/173, H02K 7/08

(54) **VERFAHREN ZUR HERSTELLUNG EINES ANTRIEBS, AUFWEISEND EINEN ELEKTROMOTOR MIT EINER BREMSANORDNUNG UND ANTRIEB**
METHOD FOR PRODUCING A DRIVE, COMPRISING AN ELECTRIC MOTOR WITH A BRAKE ASSEMBLY, AND DRIVE
PROCÉDÉ DE FABRICATION D'UN ENTRAÎNEMENT, PRÉSENTANT UN MOTEUR ÉLECTRIQUE POURVU D'UN SYSTÈME DE FREINAGE ET ENTRAÎNEMENT

(30) Priorität: 04.06.2020 DE 102020003373
(43) Veröffentlichungstag der Anmeldung: 12.04.2023
(73) Patentinhaber: SEW-EURODRIVE GmbH & Co. KG, 76646 Bruchsal (DE)
(72) Erfinder: WILGING, Klaus, 76297 Stutensee (DE)
(86) Internationale Anmeldenummer: PCT/EP2021/063351
(87) Internationale Veröffentlichungsnummer: WO 2021/244855

(56) Entgegenhaltungen:
- DE-A1- 2 257 290
- JP-A- H07 318 620
- US-B2- 6 952 061

## Beschreibung

Die Erfindung betrifft ein Verfahren zur Herstellung eines Antriebs, aufweisend einen Elektromotor mit einer Bremsanordnung, und einen Antrieb.

Es ist allgemein bekannt, dass ein Antrieb einen Elektromotor aufweist.

Aus der DE 22 57 290 A ist eine elektromagnetische Bremse bekannt.

Aus der DE 10 2012 019 415 A1 ist ein Elektromotor mit einer redundanten Bremse bekannt.

Aus der DE 10 2012 010 790 A1 ist eine Bremse bekannt.

Aus der DE 10 2013 005 239 A1 ist eine Bremsanordnung bekannt.

Aus der WO 2004 / 077 644 A2 sind Getriebemotoren bekannt.

Aus der DE 10 2008 037 737 A1 ist ein Elektromotor mit Winkelsensor bekannt.

Aus der DE 20 2016 107 420 U1 ist eine Vorrichtung zum Herstellen von Bremskraft-Übertragungen bekannt.

**Aus der** JP H07 318620 A **ist als nächstliegender Stand der Technik eine Testvorrichtung für einen Elektromotor bekannt.**

**Aus der** US 6 952 061 B2 **ist eine Motorantriebseinheit bekannt.**

Der Erfindung liegt daher die Aufgabe zugrunde, die Herstellung eines präzise steuerbaren Antriebs zu ermöglichen.

Erfindungsgemäß wird die Aufgabe bei dem Verfahren nach den in Anspruch 1 und bei dem Antrieb nach den in Anspruch 3 angegebenen Merkmalen gelöst.

Wichtige Merkmale bei dem Antrieb, aufweisend einen Elektromotor mit einer Bremsanordnung, sind, dass der Elektromotor einen über ein erstes Lager und ein zweites Lager drehbar gelagerten Rotor aufweist und ein Gehäuseteil,
wobei das erste Lager einen Innenring und einen Außenring aufweist,
wobei der Außenring des ersten Lagers in einem Magnetkörper der Bremsanordnung aufgenommen ist,
wobei das zweite Lager einen Innenring und einen Außenring aufweist,
wobei der Außenring des zweiten Lagers in einem Isolationsteil, insbesondere aus einem elektrisch und thermisch isolierenden Material, aufgenommen ist, welches im Gehäuseteil aufgenommen ist,
wobei der Außenring des zweiten Lagers zum Isolationsteil axial verschiebbar angeordnet ist,
insbesondere wobei das Isolationsteil in einer in Umfangsrichtung umlaufenden Innennut,
insbesondere als Ringnut ausgeführte Innennut, des Gehäuseteils aufgenommen ist, eingeklipst ist und/oder eingesteckt ist,
insbesondere wobei das Isolationsteil aus einem Kunststoff gefertigt ist, insbesondere aus einem glasfaserverstärkten Kunststoff gefertigt ist.

Von Vorteil ist dabei, dass die elektrisch mit Spannung beaufschlagte Statorwicklung des Elektromotors elektrisch isolierbar ist vom Getriebe oder sonstigen Metallteilen des Elektromotors. Außerdem fungiert das Isolationsmittel auch als thermische Wärmesperre, insbesondere zwischen der Statorwicklung. Da das Isolationsmittel nur in eine als Ringnut ausgeführte Innennut eingeklipst werden muss, ist eine schnelle und einfache Befestigung ermöglicht. Eine Drehmomentstütze für das Isolationsteil ist nicht notwendig, ist aber anbringbar.

Das zweite Lager wirkt nur als Loslager. Somit beeinträchtigen thermische Längenausdehnungen die Funktion des Antriebs nicht und der Antrieb ist präzise steuerbar. Hierzu ist insbesondere wichtig, dass der Winkelsensor nahe an einem Festlager einbaubar ist und das andere Lager des Motors ebenfalls ein Festlager ist, um bei Längenveränderungen keine durch Schrägverzahnung des eintreibenden Zahnrads, insbesondere Sonnenrads, der Getriebestufe, insbesondere Planetengetriebestufe, des Getriebes bewirkten, am Getriebe abtriebsseitigen Winkelveränderungen. Denn insbesondere bei Verwendung eines als Synchronmotor ausgeführten Elektromotors und bei Ausführung des Getriebes als spielarmes oder spielfreies Planetengetriebe ist ein präzises Steuern oder Regeln des Antriebs ermöglicht, wobei thermische Einflüsse erfindungsgemäß verringert sind.

Bei einer vorteilhaften Ausgestaltung ist der Innenring des ersten Lagers auf dem Rotor aufgenommen, insbesondere aufgesteckt, insbesondere und gegen eine Stufe angestellt, oder gegen einen gegen eine am Rotor ausgeformte Stufe angestellten Mitnehmer gedrückt ist,
wobei die Bremsanordnung einen Magnetkörper aufweist, insbesondere aus einem ferromagnetischen Material,
wobei der Außenring des ersten Lagers im Magnetkörper der Bremsanordnung aufgenommen ist, insbesondere und gegen eine Stufe angestellt ist. Von Vorteil ist dabei, dass das erste Lager als Festlager ausführbar ist, aber die Lageraufnahme selbst schwimmend in einem Aufnahmeteil oder im Gehäuseteil aufgenommen ist. Somit sind thermisch bedingte Längenänderungen aufnehmbar und trotzdem ein Festlager eingesetzt ist, so dass die Rotorwelle eines Winkelsensors direkt am Rotor anmontierbar ist Der Bereich der Verbindung zwischen der Rotorwelle und dem Rotor überlappt in axialer Richtung mit dem vom Festlager, also ersten Lager, in axialer Richtung überdeckten Bereich oder ist in ihm enthalten. Somit ist eine hochgenaue Erfassung der Winkelpositionen des Rotors über einen weiten Bereich von Temperaturen ermöglicht.

Erfindungsgemäß ist der Außenring des zweiten Lagers, teilweise in eine Ausnehmung des Isolationsteils eingesteckt und teilweise in einer Ausnehmung eines Flanschteils eingesteckt. Erfindungsgemäß ist dabei, dass bei der Herstellung der Außenring in einem ersten Verfahrensschritt zwar aufgenommen ist, allerdings nur in einem Isolationsteil, insbesondere in Kunststoff. Erst später nach Einbau des Getriebes samt Flanschteil fungiert das zweite Lager nicht mehr als Loslager, sondern als Festlager. Somit ist auch bei thermischen Längenänderungen des Rotors ein in den Rotor eingestecktes Sonnenrad winkelfest.

Bei einer vorteilhaften Ausgestaltung ist das Isolationsteil axial zwischen dem Flanschteil und der Statorwicklung, insbesondere der mit dem Gehäuseteil drehfest verbundenen Statorwicklung, angeordnet,
wobei der vom Isolationsteil überdeckte, insbesondere auf die Drehachse des Rotors des Elektromotors bezogene, Radialabstandsbereich den von der Statorwicklung des Elektromotors überdeckten Radialabstandsbereich umfasst. Von Vorteil ist dabei, dass das Isolationsteil axial zwischengeordnet ist und somit elektrisch und thermisch isolierend wirksam ist.

Bei einer vorteilhaften Ausgestaltung ist der Außenring des zweiten Lagers gegen eine am Flanschteil ausgebildete Stufe angestellt,
wobei der Innenring des zweiten Lagers auf dem Rotor aufgenommen, insbesondere aufgesteckt, ist, insbesondere und gegen eine am Rotor ausgebildete Stufe angestellt ist. Von Vorteil ist dabei, dass das zweite Lager als Festlager ausgeführt ist, wenn das Flanschteil einmontiert ist. Somit wird das Auftreten von thermisch bewirkten Winkelabweichungen verhindert und dies sogar bei Verwendung eines schrägverzahnten eintreibenden ersten Zahnrads, insbesondere Sonnenrads, wobei dieses erste Zahnrad mit dem Rotor drehfest verbunden ist

Bei einer vorteilhaften Ausgestaltung ist das Flanschteil mit einem Hohlrad einer Planetengetriebestufe eines mit dem Elektromotor verbundenen und vom Elektromotor angetriebenen Getriebes oder mit einem mit einem Hohlrad einer Planetengetriebestufe eines mit dem Elektromotor verbundenen und vom Elektromotor angetriebenen Getriebes verbundenen Teil, insbesondere Getriebegehäuseteil oder Lagerflansch, verbunden, insbesondere mittels Schrauben,
wobei der Rotor des Elektromotors mit einem insbesondere schrägverzahnten Sonnenrad der Planetengetriebestufe drehfest verbunden ist,
insbesondere wobei Planetenräder der Planetengetriebestufe sowohl mit dem Sonnenrad als auch mit dem Hohlrad im Eingriff sind,
insbesondere wobei im Lagerflansch ein Lager zur drehbaren Lagerung eines Planetenträgers der Planetengetriebestufe aufgenommen ist. Von Vorteil ist dabei, dass bei Ausführung des Elektromotors als Synchronmotor und Ausführung Getriebes als Planetengetriebe der Antrieb als Präzisionsantrieb ausführbar ist.

Erfindungsgemäß ist der das Flanschteil berührende Oberflächenbereich des Außenrings des zweiten Lagers von dem das Isolationsteil berührenden Oberflächenbereich des Außenrings des zweiten Lagers in axialer Richtung beabstandet oder grenzt an ihn an, und überlappt nicht. Von Vorteil ist dabei, dass das Flanschteil und das Isolationsteil am Außenring des zweiten Lagers axial nebeneinander angeordnet werden.

Bei einer vorteilhaften Ausgestaltung ist im Flanschteil ein Wellendichtring aufgenommen, welcher das Flanschteil zum Rotor hin abdichtet,

insbesondere wobei eine Dichtlippe des Wellendichtrings auf einer Dichtfläche des Rotors läuft. Von Vorteil ist dabei, dass das Flanschteil den ölbefüllten Innenraumbereich des Getriebes öldichtet zum Elektromotor hin.

Wichtige Merkmale der Erfindung bei dem Antrieb, aufweisend einen Elektromotor mit einer Bremsanordnung, sind, dass der Elektromotor einen über ein erstes Lager und ein zweites Lager drehbar gelagerten Rotor aufweist und ein Gehäuseteil,
wobei das erste Lager einen Innenring und einen Außenring aufweist,
wobei der Innenring des ersten Lagers auf dem Rotor aufgenommen, insbesondere aufgesteckt, ist, insbesondere und gegen eine Stufe angestellt ist oder gegen einen gegen eine am Rotor ausgeformte Stufe angestellten Mitnehmer gedrückt ist,
wobei die Bremsanordnung einen Magnetkörper aufweist, insbesondere aus einem ferromagnetischen Material,
wobei der Außenring des ersten Lagers im Magnetkörper der Bremsanordnung aufgenommen ist, insbesondere und gegen eine Stufe angestellt ist.

Von Vorteil ist dabei, dass eine präzise Steuerung des Antriebs ermöglicht wird. Denn infolge der beiden Festlager des Rotors ist eine fehlerarme robuste Winkelerfassung am Rotor des Elektromotors des als Getriebemotor ausgebildeten Antriebs ermöglicht, wobei der erfasste Winkelwert möglichst genau proportional dem Winkelwert der abtreibenden Welle ist.

Durch Einsatz eines Festlagers im Bereich des Winkelsensors ist nämlich auch bei thermisch bedingten Ausdehnungen im Antrieb die Winkelerfassung sehr genau möglich, weil der Abstand zwischen dem als Festlager ausgebildeten ersten Lagers zum Winkelsensor hin viel geringer ist als der Abstand zwischen dem ersten Lager und dem zweiten Lager.

Da das zweite Lager, also das getriebeseitige Lager, des Rotors ebenfalls ein Festlager ist, bleibt auch bei thermischen Ausdehnungen das in die Rotorwelle eingesteckte schrägverzahnte Sonnenrad im Wesentlichen auf seiner axialen Position. Durch thermisch bedingte Längenänderungen ändert sich zwar der Abstand zwischen dem ersten und zweiten Lager insbesondere in Bezug auf das Gehäuseteil, aber das Sonnenrad wird trotz seiner Schrägverzahnung nicht verdreht und der Winkelsensor arbeitet ebenfalls ungestört.

Das erste Lager ist im Magnetkörper der Bremsanordnung aufgenommen. Daher wird die Abstandsänderung zwischen dem ersten und zweiten Lager nicht durch Verschiebung des ersten Lagers im Magnetkörper, sondern durch Verschiebung des Magnetkörpers zum Aufnahmeteil, also auch zum Gehäuseteil kompensiert.

Auf diese Weise ist also eine axial beidseitige Festlagerung mit einer gegen thermische Einflüsse robusten Winkelerfassung ermöglicht.

Vorzugsweise ist der Rotor aus Stahl gefertigt und das Gehäuseteil aus Aluminium. Wenn also Rotor und Gehäuseteil aus verschiedenen Materialien gefertigt sind, ist erfindungsgemäß ein Winkelfehler verhinderbar oder zumindest verringerbar.

Bei einer vorteilhaften Ausgestaltung ist das zweite Lager, insbesondere der Außenring des zweiten Lagers, im Gehäuse oder in einem mit dem Gehäuseteil verbundenen Flanschteil aufgenommen, insbesondere und ist gegen eine Stufe angestellt. Von Vorteil ist dabei, dass thermisch bedingte Längenänderungen des Gehäuses und/oder des Rotors, insbesondere des Gehäuses relativ zum Rotor, keine Verdrehung der Wellen des Getriebes bewirken, auch wenn diese mit schrägverzahnten, miteinander im Eingriff sich befindenden Verzahnungsteilen drehfest verbunden sind.

Bei einer vorteilhaften Ausgestaltung ist der Innenring des zweiten Lagers auf dem Rotor aufgenommen, insbesondere aufgesteckt, insbesondere und ist gegen eine Stufe angestellt. Von Vorteil ist dabei, dass das zweite Lager als Festlager ausgeführt ist und somit der am Rotor erfasste Winkelwert dem Winkelwert der abtreibenden Welle des Getriebes proportional ist. Dies gilt insbesondere auch dann, wenn das mit dem Rotor drehfest verbundene Verzahnungsteil, insbesondere Sonnenrad, schrägverzahnt ausgeführt ist.

Bei einer vorteilhaften Ausgestaltung ist der Magnetkörper in einem mit dem Gehäuseteil fest verbundenen Aufnahmeteil aufgenommen oder im Gehäuseteil aufgenommen,
wobei der Magnetkörper in axialer Richtung, insbesondere also parallel zur Richtung der Drehachse des Rotors, verschiebbar angeordnet ist und mit einem ersten Drehmomentstützteil verbunden ist, insbesondere mittels zweiter, insbesondere in Umfangsrichtung regelmäßig voneinander beabstandeter, Schrauben,
wobei das erste Drehmomentstützteil mit dem Aufnahmeteil und/oder mit dem Gehäuseteil verbunden ist, insbesondere mittels erster, insbesondere in Umfangsrichtung regelmäßig voneinander beabstandeter, Schrauben. Von Vorteil ist dabei, dass bei thermisch bedingten Längenänderungen der Magnetkörper relativ zum Aufnahmeteil und/oder zum Gehäuseteil des Elektromotors verschoben wird. Die Festlagerfunktion des ersten und des zweiten Lagers bleibt trotzdem erhalten.

Bei einer vorteilhaften Ausgestaltung ist das erste Drehmomentstützteil als Balg, insbesondere Metallbalg, ausgeführt, wobei der das Aufnahmeteil berührende Bereich des ersten Drehmomentstützteils in axialer Richtung beabstandet ist von dem den Magnetkörper berührenden Bereich, insbesondere der auf kleinerem Radialabstand angeordnet ist als der das Aufnahmeteil berührende Bereich. Von Vorteil ist dabei, dass die Lagerspannung vom gleichen Teil erzeugt wird, das auch als Drehmomentstütze für den Magnetkörper fungiert. Denn der Magnetkörper ist nicht nur in axialer Richtung verschiebbar im Aufnahmeteil aufgenommen, sondern auch in Umfangsrichtung drehbar.

Bei einer anderen vorteilhaften Ausgestaltung ist das erste Drehmomentstützteil, insbesondere Metallblech, derart als Blechteil ausgeführt, dass der das Aufnahmeteil berührende Bereich des ersten Drehmomentstützteils auf der selben axialen Position angeordnet ist wie der von dem Magnetkörper berührte Bereich des Drehmomentstützteils, insbesondere der auf kleinerem Radialabstand angeordnet ist als der das Aufnahmeteil berührende Bereich. Von Vorteil ist dabei, dass das Drehmomentstützteil für die Aufgabe der Drehmomentdurchleitung optimierbar ist und die Federelemente für die Aufgabe der Erzeugung der Lagerspannung optimierbar sind.

Bei einer vorteilhaften Ausgestaltung ist eine Ankerscheibe mit dem Mitnehmer drehfest aber in axialer Richtung verschiebbar angeordnet,
insbesondere wobei ein zwischen dem Mitnehmer und der Ankerscheibe angeordnetes Federelement, insbesondere ein mittels erster Verbindungselemente mit dem Mitnehmer und mittels zweiter Verbindungselemente mit der Ankerscheibe verbundenes Federblech, eine auf die Ankerscheibe wirkende, zum Mitnehmer hin gerichtete Federkraft erzeugt,
insbesondere wobei das Federelement am Mitnehmer abgestützt ist,
insbesondere wobei die Verbindungselemente als Nieten ausgeführt sind. Von Vorteil ist dabei, dass die Ankerscheibe in einfacher Weise über ein Federblech und Verbindungselemente mit dem Mitnehmer verbindbar sind.

Bei einer vorteilhaften Ausgestaltung ist im Magnetkörper eine Spule aufgenommen, insbesondere in radialer Richtung zwischen dem Innenring des Magnetkörpers und dem Außenring des Magnetkörpers. Von Vorteil ist dabei, dass abhängig von der Bestromung der Spule ein Gegenfeld zu dem vom Dauermagneten erzeugten Magnetfeld erzeugbar ist, so dass bei Bestromung der Spule die Ankerscheibe von einem geringeren Magnetfluss durchströmt wird als bei Nichtbestromung. Somit ist wird die Ankerscheibe bei Nichtbestromung der Spule entgegen der von dem Federblech erzeugten Federkraft zum Magnetkörper hingezogen und bei Bestromung der Spule mittels der Federkraft vom Magnetkörper weggezogen.

Bei einer vorteilhaften Ausgestaltung weist der Magnetkörper einen Außenring und einen Innenring auf,
wobei zwischen dem Innenring und dem Außenring ein Dauermagnet angeordnet ist, insbesondere wobei in axialer Richtung zwischen dem Innenring und dem Außenring ein Dauermagnet angeordnet ist. Von Vorteil ist dabei, dass der aus dem Nordpol austretende Magnetfluss des Dauermagneten durch den Innenring des Magnetkörpers und von dort direkt oder über einen Luftspalt zur Ankerscheiben und von dort direkt oder über einen Luftspalt zum Außenring des Magnetkörpers und von dort zum Südpol des Dauermagneten fließt. Alternativ ist Nordpol und Südpol permutiert. In jedem Fall aber überbrückt ein Distanzring den Dauermagneten, so dass der zwischen dem Innenring des Magnetkörpers und dem Außenring
des Magnetkörpers angeordnete Distanzring eine Annäherung des Innenrings des Magnetkörpers zum Außenring des Magnetkörpers verhindert. Vorzugsweise ist der Distanzring radial außerhalb des Dauermagneten angeordnet und/oder aus einem diamagnetischen Material, insbesondere aus Kunststoff, ausgeführt.

Bei einer vorteilhaften Ausgestaltung ist der Außenring des ersten Lagers gegen eine am Magnetkörper, insbesondere am Innenring des Magnetkörpers, ausgeformte Stufe angestellt,
wobei der Innenring des ersten Lagers gegen eine an der Welle ausgeformte Stufe angestellt ist. Von Vorteil ist dabei, dass das erste Lager als Festlager ausgeführt ist, aber der Magnetkörper axial verschiebbar zum Gehäuseteil ist, zu welchem das zweite Lager unverschiebbar angeordnet ist, da es ebenfalls als Festlager ausgeführt ist.

Der Rotor ist vorzugsweise nur über das erste und das zweite Lager drehbar gelagert.

Bei einer vorteilhaften Ausgestaltung ist bei Bestromung der Spule der die Ankerscheibe durchdringende Magnetfluss vermindert, insbesondere im Vergleich zur Nichtbestromung der Spule. Von Vorteil ist dabei, dass die Bremswirkung steuerbar ist.

Bei einer vorteilhaften Ausgestaltung ist der Außenring des Magnetkörpers im Aufnahmeteil axial verschiebbar angeordnet. Von Vorteil ist dabei, dass thermisch bedingte unterschiedliche Längenveränderungen des Gehäuseteils und des Rotors die Winkeldetektion des Winkelsensors, der näher am ersten als am zweiten Lager angeordnet ist, nur unwesentlich beeinflussen.

Bei einer vorteilhaften Ausgestaltung ist die Rotorwelle eines Winkelsensors mit dem Rotor drehfest verbunden und das Gehäuse des Winkelsensors mit einem ersten Bereich des zweiten Drehmomentstützteils verbunden ist, wobei ein zweiter Bereich des zweiten Drehmomentstützteils mit dem Innenring des Magnetkörpers verbunden ist, insbesondere zusammen mit einem Hilfsblech, mittels einer Schraube an den Innenring des Magnetkörpers angedrückt ist,
insbesondere wobei der zweite Bereich auf größerem Radialabstand angeordnet ist als der erste Bereich, insbesondere wobei der zweite Bereich radial weiter außen angeordnet ist als der erste Bereich. Von Vorteil ist dabei, dass eine Temperatur-unabhängige Winkelerfassung ausführbar ist, da der Winkelsensor sozusagen mitgenommen wird, wenn die Rotorlänge sich relativ zum Gehäuseteil ändert und somit das erste Lager axial verschoben wird.

Bei einer vorteilhaften Ausgestaltung ist der vom ersten Drehmomentstützteil überdeckte Radialabstandsbereich beabstandet von dem vom zweiten Drehmomentstützteil überdeckten Radialabstandsbereich und/oder der vom ersten Drehmomentstützteil überdeckte Radialabstandsbereich ist radial außerhalb des vom zweiten Drehmomentstützteil überdeckten Radialabstandsbereichs angeordnet. Von Vorteil ist dabei, dass das erste Drehmomentstützteil unabhängig vom zweiten wirkt und bei kompakter Ausführung trotzdem ein größeres Drehmoment übertragbar ist.

Bei einer vorteilhaften Ausgestaltung weist das erste Drehmomentstützteil einen Innenringbereich, einen Außenringbereich und den Innenringbereich mit dem Außenringbereich verbindende, insbesondere in Umfangsrichtung regelmäßig voneinander beabstandete, Stege aufweist,
wobei der Innenringbereich am Innenring des Magnetkörpers anliegt und der Außenringbereich am Aufnahmeteil oder am Gehäuseteil anliegt,
wobei entweder
   - der größte Umfangswinkelwert des von einem jeweiligen Steg bei einem Radialabstand überdeckte Umfangswinkelbereichs mit zunehmendem Radialabstand monoton, insbesondere streng monoton, zunimmt, insbesondere also in Umfangsrichtung anwächst und der kleinste Umfangswinkelwert dieses Umfangswinkelbereichs mit zunehmendem Radialabstand monoton, insbesondere streng monoton, zunimmt, insbesondere also in Umfangsrichtung anwächst,
oder
   - der größte Umfangswinkelwert des von einem jeweiligen Steg bei einem Radialabstand überdeckte Umfangswinkelbereichs mit zunehmendem Radialabstand monoton, insbesondere streng monoton, abnimmt,
      und der kleinste Umfangswinkelwert dieses Umfangswinkelbereichs mit
      zunehmendem Radialabstand monoton, insbesondere streng monoton, abnimmt.

Von Vorteil ist dabei, dass die Drehmomentstütze in einer Vorzugsdrehrichtung besonders wirksam und/oder steif ausgeführt ist. wenn also der Rotor in nur einer einzigen Drehrichtung betrieben wird, ist beim Abbremsen das Bremsmoment über die Drehmomentstütze effizient ableitbar, insbesondere in einer Drehrichtung.

Bei einer vorteilhaften Ausgestaltung drückt der am Aufnahmeteil abgestützte Balg den Innenring des Magnetkörpers, insbesondere die am Innenring des Magnetkörpers ausgeformte Stufe, derart auf den Außenring des ersten Lagers drückt, dass der Innenring des ersten Lagers den Mitnehmer gegen die am Rotor ausgeformte Stufe andrückt. Von Vorteil ist dabei, dass der Balg die Drehmomentstützfunktion, also Durchleitung des Reaktionsmoments, und die Erzeugung der Lagerspannung bewirkt.

Bei einer anderen vorteilhaften Ausgestaltung drückt ein am Aufnahmeteil, am Gehäuseteil oder an einem mit dem Aufnahmeteil oder Gehäuseteil fest verbundenen Ring abgestütztes Federelement den Innenring des Magnetkörpers, insbesondere die am Innenring des Magnetkörpers ausgeformte Stufe, derart auf den Außenring des ersten Lagers, dass der Innenring des ersten Lagers den Mitnehmer gegen die am Rotor ausgeformte Stufe andrückt. Von Vorteil ist dabei, dass das Federelement auf die Erzeugung der Lagerspannung und das Drehmomentstützteil auf die Reaktionsmomentableitung optimierbar ist.

Bei einer vorteilhaften Ausgestaltung weist der Außenring des zweiten Lagers insbesondere bei noch nicht mit dem Gehäuseteil verbundenen Flanschteil und Getriebe, in einem Isolationsteil, insbesondere in einem aus glasfaserverstärktem Kunststoff hergestellten Isolationsteil, aufgenommen ist,
wobei das Isolationsteil im Gehäuseteil aufgenommen ist, insbesondere in einer in Umfangsrichtung umlaufenden Ringnut des Gehäuseteils aufgenommen ist,
wobei das Flanschteil auf der vom ersten Lager abgewandten Seite des Isolationsteils angeordnet ist. Von Vorteil ist dabei, dass eine Funktionsprüfung des Elektromotors vor Montieren des Getriebes mit Flanschteil ausführbar ist. Hierzu ist der Außenring des zweiten Lagers im Isolationsteil aufgenommen.

Erfindungsgemäß berührt ein erster Teilbereich des vom Außenring des zweiten Lagers in axialer Richtung überdeckten Bereichs das Flanschteil und ein zweiter Teilbereich des vom Außenring des zweiten Lagers berührt in axialer Richtung überdeckten Bereichs das Isolationsteil,
wobei der erste Teilbereich vom zweiten Teilbereich beabstandet ist oder an diesen angrenzt, insbesondere aber der erste Teilbereich nicht mit dem zweiten Teilbereich überlappt. Von Vorteil ist dabei, dass einerseits eine Funktionsprüfung vor Anmontieren des Flanschteils ausführbar ist und andererseits nach Anmontieren des Flanschteils das zweite Lager sogar als Festlager fungiert. Dabei wird beim Anmontieren des Flanschteils das zweite Lager axial gegen die vom Federelement erzeugte Federkraft verschoben.

Wichtige Merkmale bei dem Verfahren zur Herstellung eines Antriebs, aufweisend einen Elektromotor mit einer Bremsanordnung,
wobei der Elektromotor einen über ein erstes Lager und ein zweites Lager drehbar gelagerten Rotor aufweist und ein Gehäuseteil,
wobei das erste Lager einen Innenring und einen Außenring aufweist,
wobei der Außenring des ersten Lagers in einem Magnetkörper der Bremsanordnung aufgenommen ist, insbesondere als Festlager,
insbesondere wobei der Magnetkörper im Gehäuseteil oder in einem mit dem Gehäuseteil verbundenen Aufnahmeteil drehfest zum Gehäuseteil und axial verschiebbar zum Gehäuseteil aufgenommen ist,
wobei das zweite Lager einen Innenring und einen Außenring aufweist,
wobei der Außenring des zweiten Lagers in einem Isolationsteil, insbesondere aus einem elektrisch und thermisch isolierenden Material, aufgenommen ist, welches im Gehäuseteil aufgenommen ist, insbesondere als Loslager,
insbesondere wobei der Außenring des zweiten Lagers zum Isolationsteil axial verschiebbar angeordnet ist,
insbesondere wobei das Isolationsteil in einer in Umfangsrichtung umlaufenden Innennut, insbesondere als Ringnut ausgeführte Innennut, des Gehäuseteils aufgenommen ist, eingeklipst ist und/oder eingesteckt ist,
insbesondere wobei das Isolationsteil aus einem Kunststoff gefertigt ist, insbesondere aus einem glasfaserverstärkten Kunststoff gefertigt ist,
wobei
   - in einem ersten Verfahrensschritt eine Funktionsprüfung des Elektromotors durchgeführt wird, insbesondere also der Elektromotor im Leerlauf betrieben wird, insbesondere wobei das erste Lager als im Magnetkörper aufgenommenes Festlager fungiert und das zweite Lager als im Isolationsteil aufgenommenes Loslager fungiert,
   - in einem zweiten, zeitlich dem ersten Verfahrensschritt nachfolgenden Verfahrensschritt ein Getriebe mit dem Elektromotor verbunden wird,
      wobei der Außenring des zweiten Lagers in eine Ausnehmung eines mit dem Getriebe verbundenen Flanschteils teilweise eingesteckt und gegen eine Stufe des Flanschteils angestellt wird, wobei das zweite Lager als im Flanschteil aufgenommenes Festlager fungiert.

Bei einer vorteilhaften Ausgestaltung wird im ersten Verfahrensschritt die Winkelgeschwindigkeit und/oder angefahrene Winkelpositionen mittels eines im Elektromotor integriert angeordneten Winkelsensors geprüft,
wobei im zweiten Verfahrensschritt mittels des Winkelsensors Winkelpositionen und/oder Winkelgeschwindigkeiten detektiert werden und zur Regelung der Winkellage des Rotors des Elektromotors verwendet werden.

Weitere Vorteile ergeben sich aus den Unteransprüchen.

Die Erfindung wird nun anhand von schematischen Abbildungen näher erläutert:
In der Figur 1 ist ein erfindungsgemäßer Antrieb, aufweisend ein von einem Bremsmotor angetriebenes Getriebe, im Querschnitt dargestellt, wobei ein als Drehmomentstütze fungierender Balg 40 zur Erzeugung von Lagerspannung der Lageranordnung des Rotors 9 des Bremsmotors vorgesehen ist.

In der Figur 4 ist ein Ausschnitt der Figur 1 vergrößert dargestellt.

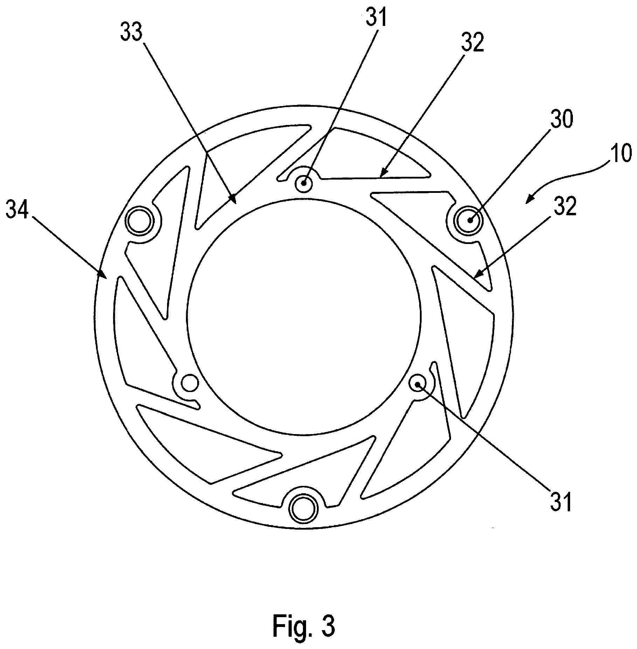

In der Figur 3 ist das Drehmomentstützteil in Draufsicht dargestellt.

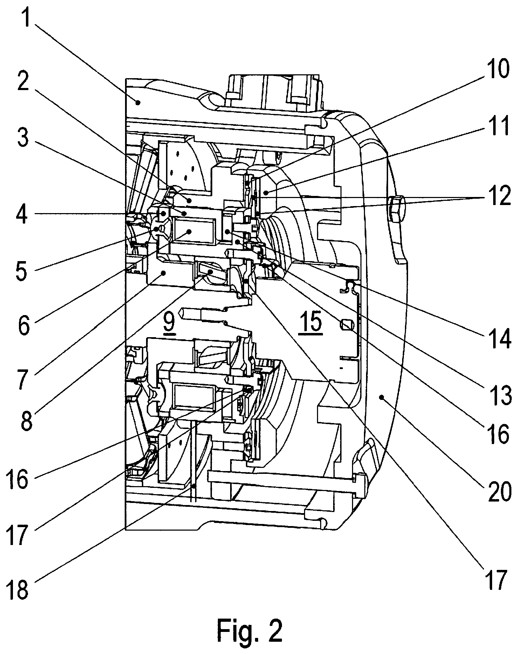

In der Figur 2 ist der Ausschnitt bei einem weiteren erfindungsgemäßen Antrieb dargestellt, wobei statt des Balgs 40 ein erstes Drehmomentstützteil 10 der Bremsanordnung vorgesehen ist.

Wie in den Figuren 2 und Figuren 3 dargestellt, weist der Elektromotor einen Rotor 9, der axial beidseitig mittels Festlagern gelagert ist und an seinem ersten axialen Endbereich mit einer Rotorwelle eines Winkelsensors 15 drehfest verbunden ist.

An seinem vom Winkelsensor 15 abgewandten Endbereich ist der Rotor 9 mit einem Sonnenrad einer Planetengetriebestufe des Getriebes drehfest verbunden. Insbesondere ist das Sonnenrad als Einsteckritzel mit dem Rotor 9 verbunden.

Mit dem Sonnenrad stehen Planetenräder im Eingriff, welche an einem Planetenträger drehbar gelagert sind und mit einem mit dem Getriebegehäuse verbundenen Hohlrad im Eingriff sind. Der Planetenträger fungiert als abtreibenden Welle der Planetengetriebestufe. Das Getriebegehäuse ist mit einem Flanschteil 22 verbunden, das eines der Lager 24 des Rotors 9 aufnimmt. Dieses Lager 22 ist als Festlager ausgeführt. Hierzu weist das Flanschteil 22 eine Stufe auf, gegen die der Außenring des Lagers 22 ausgeführt ist. Der Innenraum des Lagers 22 ist gegen eine am Rotor 9 ausgebildete Stufe angestellt.

Der von dem Lager 24 in axialer Richtung, also parallel zur Drehachse des Rotors 9, überdeckte Bereich überlappt mit dem von dem als Einsteckritzel ausgeführten Sonnenrad
und/oder
der von dem Flanschteil 22 in axialer Richtung, also parallel zur Drehachse des Rotors 9, überdeckte Bereich überlappt mit dem von dem als Einsteckritzel ausgeführten Sonnenrad.

Außerdem ist im Gehäuseteil 1 ein Isolationsteil 23 zur thermische und elektrischen Trennung sowie zur Aufnahme des Lagers für Funktionsprüfung aufgenommen. Hierzu ist eine Innennut im Gehäuseteil 1 eingebracht und das Isolationsteil 23 in die Innennut eingesteckt. Dieses Isolationsteil 23 nimmt auch den Außenring des Lagers 24 auf. Allerdings weist das Isolationsteil 23 keine Stufe auf, so dass das Lager 24 nicht axial begrenzt wird mittels des Isolationsteils 23.

Vorzugsweise ist das Isolationsteil 23 aus einem glasfaserverstärkten Kunststoff gefertigt und hat somit genügend viel Stabilität, dass eine Funktionsprüfung des Elektromotors ausführbar ist, wenn das Getriebe und somit auch das Flanschteil 22 nicht vorhanden ist. Für die Funktionsprüfung ist allerdings nur ein Leerlauf des Elektromotors möglich.

Der Innenring des Lagers 24 sitzt auf einem fein bearbeiteten Lagersitz an dem Rotor 9 auf und liegt an der Stufe des Rotors 9 an. Der Außenring des Lagers 24 ist in eine Ausnehmung des Isolationsteils 23 eingesteckt und ist dabei nicht axial gesichert, solange nicht der Außenring in dem Flanschteil 22 aufgenommen und gegen dessen Stufe angestellt ist.

Bei der Herstellung ist also eine bloße Funktionsprüfung im Leerlauf des Elektromotors möglich, nicht aber eine Belastungsprüfung.

Da das Lager 9 sehr nahe an dem mit dem Rotor 9 verbundenen Sonnenrad angeordnet ist, bewirkt eine thermische Ausdehnung des Rotors 9 und/oder des Gehäuses 1 keine wesentliche Winkeländerung an dem Sonnenrad und den mit diesem im Eingriff stehenden Planetenrädern.

Auch das erste Lager 8 des Rotors 9 ist als Festlager ausgeführt. Sowohl der Innenring des ersten Lagers 8 als auch der Außenring des Lagers 8 sind axial begrenzt. Hierzu ist vorzugsweise am Rotor 9 eine Stufe ausgeformt, wobei der Innenring des ersten Lagers 8 axial neben einem Mitnehmer 7 angeordnet ist, der an einer Stufe des Rotors 9 anliegt.

Der Außenring des ersten Lagers 8 ist in einem Innenring 13 eines Magnetkörpers der am Elektromotor angeordneten Bremsanordnung aufgenommen und liegt an einer Stufe des Innenrings 13 des Magnetkörpers an.

Der Magnetkörper ist aus dem Innenring 13 und einem Außenring 3 gebildet. Auf dem Innenring 13 des Magnetkörpers ist eine Spule 6 aufgesteckt, die über elektrische Versorgungsleitungen 18 mit Strom beaufschlagbar ist, so dass die Spule 6 bestrombar ist.

Die Spule 6 ist radial innerhalb des Außenrings 3 und radial außerhalb des Innenrings 8 des Magnetkörpers angeordnet.

Am Gehäuseteil 1 ist ein Aufnahmeteil 2, insbesondere Bremslagerschild, befestigt. Der Magnetkörper mit der in ihm enthaltenen Spule 6 ist in dem Aufnahmeteil 2 aufgenommen.

Zur Vorspannung der aus dem ersten Lager 8 und dem zweiten Lager 9 gebildeten Lageranordnung drücken Federelemente 12, die an einem mit dem Aufnahmeteil 2 verbundenen Ring 11 abgestützt sind, den Innenring 13 des Magnetkörpers auf den Außenring des ersten Lagers 8 und somit diesen in Richtung zum zweiten Lager 24 hin.

Somit spannen die Federelemente 12 die Lageranordnung vor. Wenn also nun das Gehäuse 1 sich thermisch bedingt stärker ausdehnt also der Rotor 9, bleibt die Lageranordnung vorgespannt. Obwohl der Rotor 9 in zwei Festlagern gelagert ist, ist die Lageranordnung vor zu hohen Spannungen geschützt.

Außerdem ist die Funktionsweise der Bremse ungestört.

Denn zwischen dem Außenring 3 des Magnetkörpers und dem Innenring 13 des Magnetkörpers ist ein Dauermagnet 14 angeordnet, dessen Magnetfluss durch den Außenring 3 des Magnetkörpers zu einer Ankerscheibe 4 und von der Ankerscheibe 4 zum Innenring 13 des Magnetkörpers geführt ist.

Ein axial zwischen der Ankerscheibe 4 und dem Mitnehmer 7 angeordnetes Federblech ist mit ersten Verbindungselementen 5, insbesondere Nieten, an der Ankerscheibe 4 befestigt. Das Federblech ist mit zweiten Verbindungselementen, insbesondere Nieten, an dem Mitnehmer 7 befestigt. Das Federblech wirkt einer Entfernung der Ankerscheibe 4 vom Mitnehmer 7 entgegen. Denn die Federkraft zieht bei zunehmender Entfernung der Ankerscheibe 4 von dem Mitnehmer 7 die Ankerscheibe 4 mit einer zunehmenden Kraft zurück, also hin zum Mitnehmer 7. Die Magnetkraft des Dauermagneten 14 überwindet jedoch die vom Federblech erzeugte Federkraft.

Bei Nicht-Bestromung der Spule 6 wird zur Verminderung des zwischen der Ankerscheibe 4 und dem Magnetkörper vorhandenen Luftspaltes die Ankerscheibe 4 zum Magnetkörper hingezogen, so dass die mit dem Mitnehmer 7 beziehungsweise mit dem Rotor 9 drehfest verbundene Ankerscheibe 4 auf den Magnetkörper gedrückt und somit ein Bremsmoment erzeugt wird.

Bei Bestromung der Spule 6 wird ein Gegenfeld zu dem von dem Dauermagneten erzeugten Magnetfeld in Wirkung gebracht, so dass weniger oder gar kein Magnetfluss über die Ankerscheibe 4 fließt und diese daher mittels des Federblechs axial vom Magnetkörper weggezogen wird.

Die Ankerscheibe 4 ist also drehfest mit dem Rotor 9 aber axial bewegbar angeordnet.

Ein am Aufnahmeteil mittels Schrauben befestigtes Drehmomentstützteil 10 ist mit dem Innenring des Magnetkörpers verbunden, insbesondere mittels weiterer Schrauben. Somit ist das Reaktionsmoment der Bremsanordnung ans Gehäuse abgeleitet.

Vorzugsweise ist das Drehmomentstützteil 10 axial zwischen dem Aufnahmeteil 2 und den Federelementen 12 angeordnet.

Die Rotorwelle des Winkelsensors 15 ist drehfest mit dem Rotor 9 verbunden und relativ drehbar zum Gehäuse des Winkelsensors 15 angeordnet, das mittels des zweiten Drehmomentstützteils 16 am Innenring 13 des Magnetkörpers abgestützt ist. Hierzu ist das zweite Drehmomentstützteil 16 von einer in eine axial gerichtete Gewindebohrung des Innenrings 13 eingeschraubten Schraube, insbesondere von deren Schraubenkopf, angedrückt, insbesondere zum Innenring 13 des Magnetkörpers hin.

Außerdem ist noch ein Hilfsblech 17 mit Innensechskant als Montagehilfe von dieser Schraube am Innenring 13 des Magnetkörpers befestigt.

Das Hilfsblech 17 ist bei der Montage zunächst noch formschlüssig mit seinem Innensechskant auf einen außensechskantförmigen Bereich der Rotorwelle des Winkelsensors 15 aufgeschoben und ermöglicht so ein einfaches Einschrauben der Rotorwelle des Winkelsensors in den rotor 9. Erst nach ein dem Andrücken des Hilfsblechs 17 an den Innenring 13 des Magnetkörpers mittels der Schraube ist diese formschlüssige Sechskantverbindung durch axiales Verschieben des Hilfsblechs 17 gelöst und somit das Hilfsblech 17 funktionslos. Allerdings ist die Schraube durch das Hilfsblech 17 sowie das zweite Drehmomentstützteil 16 durchgeführt und somit ist das zweite Drehmomentstützteil 16 in axialer Richtung weiter vom Gehäuse des Winkelsensors 15 entfernt angeordnet. Auf diese Weise ist es zwar in Umfangsrichtung sehr steif ausgeführt, aber in axialer Richtung elastisch.

Wie in Figur 3 dargestellt, weist das erste Drehmomentstützteil einen radial innerhalb eines Außenringbereichs 34 angeordneten Innenringbereich 33 auf, wobei in Umfangsrichtung voneinander beabstandete Stege 32 den Innenringbereich 33 mit dem Außenringbereich 34 verbinden.

Am Außenringbereich 34 sind erste, durch das ersten Drehmomentstützteil 10 durchgehende Löcher 30 angeordnet, durch welche eine in das Aufnahmeteil 2 eingeschraubte Schraube hindurchragt.

Am Innenringbereich 33 sind zweite, durch das ersten Drehmomentstützteil 10 durchgehende Löcher 31 angeordnet, durch welche eine in den Innenring des Magnetkörpers eingeschraubte Schraube hindurchragt.

Die Stege 32 verlaufen mit zunehmendem Radialabstand in Umfangsrichtung zunehmend.

Insbesondere ist also der von dem jeweiligen Steg 32 bei einem jeweiligen Radialabstand überdeckte Umfangswinkelbereich in radialer Richtung zunehmend in Umfangsrichtung verschoben. Die in Umfangsrichtung gemessene Breite des Stegs 32 ist bei jedem Radialabstand vorzugsweise konstant.

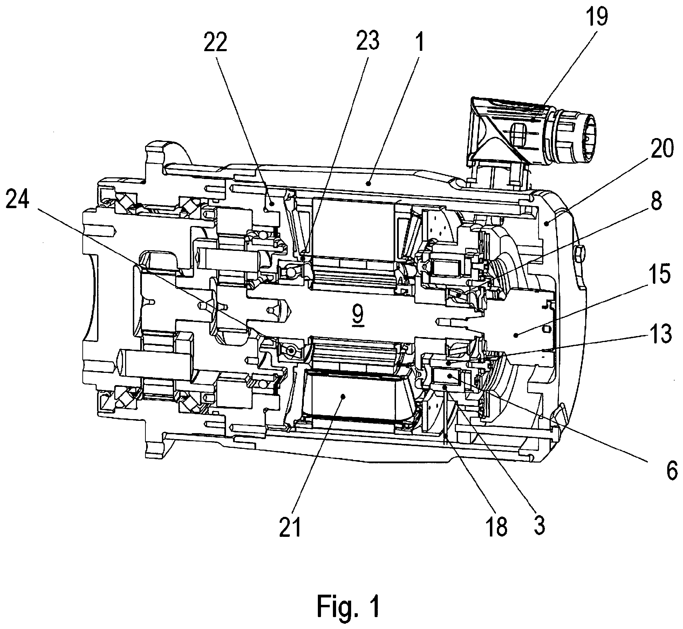

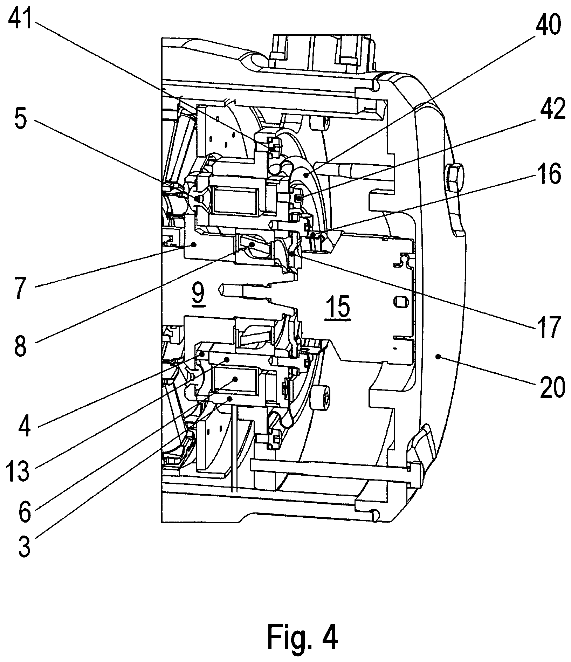

Wie in Figur 1 und Figur 4 dargestellt, ist im Unterschied zum vorgenannten Ausführungsbeispiel ein balg 40 vorgesehen, der die Federelemente 12, das erste Drehmomentstützteil 10 und auch den Ring 11.

Der Balg 40 ist mittels der zweiten Schraube 42 an den Innenring 13 des Magnetkörpers angedrückt und mittels der ersten Schraube 41 an das Aufnahmeteil 2. Der Balg 40 erzeugt eine Federkraft, die in axialer Richtung wirkt und eine vom Innenring 13 des Magnetkörpers zum zweiten Lager hin, also zum Getriebe hin, gerichtete Federkraft erzeugt.

Zur Versorgung des Bremsmotors, insbesondere der Statorwicklung 21, ist am Gehäuseteil 1 ein Steckverbinderteil 19 angeordnet.

Ein Gehäusedeckel 20 ist mit dem Gehäuseteil 1 verbunden und schützt auch die Statorwicklung 21.

Der Balg 40 ist vorzugsweise als Metallbalg ausgeführt und weist ein seinem radial innen liegenden Endbereich eine Verstärkung auf, also eine größere Wandstärke. Bei Herstellung des Metallbalgs 40 aus einem Blech konstanter Wandstärke ist der Bereich der Verstärkung beispielsweise durch umstülpen des Blechs und eine dadurch bewirkte doppelte Lage bewirkbar. Alternativ ist auch ein Ringteil schweißverbindbar.

Das erste Lager 8 sowie das zweite Lager 24 ist jeweils als Wälzlager ausgeführt, insbesondere als Kugellager.

Der Magnetkörper ist aus einem ferromagnetischen Werkstoff gefertigt, vorzugsweise aus einem Stahl oder Stahlguss.

Bei weiteren erfindungsgemäßen Ausführungsbeispielen wird das Federblech durch ein anderes Federelement oder eine Federanordnung ersetzt.

Bei weiteren erfindungsgemäßen Ausführungsbeispielen wird statt der Federelemente 12 ein einziges Federelement oder zumindest ein Federpaket eingesetzt. Die ersten Verbindungselemente 5 sind dabei auch zur Verbindung der Ankerscheibe 4 mit dem Mitnehmer 7 verwendbar.

### Bezugszeichenliste

1 Gehäuseteil
2 Aufnahmeteil, insbesondere Bremslagerschild
3 Außenring
4 Ankerscheibe
5 Verbindungselement, insbesondere Niet
6 Spule
7 Mitnehmer
8 erste Lager, insbesondere Kugellager
9 Rotor des Elektromotors
10 erstes Drehmomentstützteil, insbesondere für die Bremsanordnung
11 Ring
12 Federelemente, insbesondere Federpaket
13 Innenring
14 Dauermagnet
15 Winkelsensor
16 zweites Drehmomentstützteil, insbesondere für den Winkelsensor 15
17 Hilfsblech mit Innensechskant als Montagehilfe
18 elektrische Versorgungsleitung der Spule 6
19 Steckverbinderteil
20 Gehäusedeckel
21 Statorwicklung
22 Flanschteil, insbesondere Lagerflansch
23 Isolationsteil zur thermische und elektrischen Trennung sowie zur Aufnahme des Lagers für Funktionsprüfung
24 zweites Lager
30 erstes Loch
31 zweites Loch
32 Steg
33 Innenringbereich
34 Außenringbereich
40 Balg, insbesondere Metallbalg
41 erste Schraube
42 zweite Schraube

## Patentansprüche

1. Verfahren zur Herstellung eines Antriebs, aufweisend einen Elektromotor mit einer Bremsanordnung, insbesondere nach einem der Ansprüche 3 bis 14,
wobei der Elektromotor einen über ein erstes Lager und ein zweites Lager drehbar gelagerten Rotor aufweist und ein Gehäuseteil,
wobei das erste Lager einen Innenring und einen Außenring aufweist,
wobei der Außenring des ersten Lagers in einem Magnetkörper der Bremsanordnung aufgenommen ist, insbesondere als Festlager,
insbesondere wobei der Magnetkörper im Gehäuseteil oder in einem mit dem Gehäuseteil verbundenen Aufnahmeteil drehfest zum Gehäuseteil und axial verschiebbar zum Gehäuseteil aufgenommen ist,
wobei das zweite Lager einen Innenring und einen Außenring aufweist,
wobei der Außenring des zweiten Lagers in einem Isolationsteil, insbesondere aus einem elektrisch und thermisch isolierenden Material, aufgenommen ist, welches im Gehäuseteil aufgenommen ist,
**wobei das zweite Lager als Loslager angeordnet ist, wobei der Außenring des zweiten Lagers zum Isolationsteil axial verschiebbar angeordnet ist,**
insbesondere wobei das Isolationsteil in einer in Umfangsrichtung umlaufenden Innennut, insbesondere als Ringnut ausgeführte Innennut, des Gehäuseteils aufgenommen ist, eingeklipst ist und/oder eingesteckt ist,
insbesondere wobei das Isolationsteil aus einem Kunststoff gefertigt ist, insbesondere aus einem glasfaserverstärkten Kunststoff gefertigt ist,
wobei
- in einem ersten Verfahrensschritt eine Funktionsprüfung des Elektromotors durchgeführt wird, insbesondere also der Elektromotor im Leerlauf betrieben wird, **wobei das zweite Lager als im Isolationsteil aufgenommenes Loslager fungiert,** insbesondere wobei das erste Lager als im Magnetkörper aufgenommenes Festlager fungiert
- in einem zweiten, zeitlich dem ersten Verfahrensschritt nachfolgenden Verfahrensschritt ein Getriebe mit dem Elektromotor verbunden wird, **wobei das zweite Lager als im Flanschteil aufgenommenes Festlager fungiert,**
wobei der Außenring des zweiten Lagers in eine Ausnehmung eines mit dem Getriebe verbundenen Flanschteils teilweise eingesteckt und gegen eine Stufe des Flanschteils angestellt wird.

2. Verfahren nach Anspruch 1,
**dadurch gekennzeichnet, dass**
im ersten Verfahrensschritt die Winkelgeschwindigkeit und/oder angefahrene Winkelpositionen mittels eines im Elektromotor integriert angeordneten Winkelsensors geprüft wird,
wobei im zweiten Verfahrensschritt mittels des Winkelsensors Winkelpositionen und/oder Winkelgeschwindigkeiten detektiert werden und zur Regelung der Winkellage des Rotors des Elektromotors verwendet werden.

3. Antrieb, insbesondere hergestellt nach einem Verfahren nach Anspruch 1 oder 2,
wobei der Antrieb einen Elektromotor mit einer Bremsanordnung aufweist,
wobei der Elektromotor einen über ein erstes Lager und ein zweites Lager drehbar gelagerten Rotor aufweist und ein Gehäuseteil,
wobei das erste Lager einen Innenring und einen Außenring aufweist,
wobei der Außenring des ersten Lagers in einem Magnetkörper der Bremsanordnung aufgenommen ist,
wobei das zweite Lager einen Innenring und einen Außenring aufweist,
wobei der Außenring des zweiten Lagers in einem Isolationsteil, insbesondere aus einem elektrisch und thermisch isolierenden Material, aufgenommen ist, welches im Gehäuseteil aufgenommen ist,
wobei
**der Außenring des zweiten Lagers, teilweise in eine Ausnehmung des Isolationsteils eingesteckt ist und teilweise in einer Ausnehmung eines Flanschteils eingesteckt ist, wobei ein erster Teilbereich des vom Außenring des zweiten Lagers in axialer Richtung überdeckten Bereichs das Flanschteil berührt,**
**wobei ein zweiter Teilbereich des vom Außenring des zweiten Lagers in axialer Richtung überdeckten Bereichs das Isolationsteil berührt,**
**wobei der erste Teilbereich vom zweiten Teilbereich beabstandet ist oder an diesen angrenzt, aber der erste Teilbereich nicht mit dem zweiten Teilbereich überlappt,**
**wobei der Außenring des zweiten Lagers zum Isolationsteil axial verschiebbar angeordnet ist,**
**wobei bei der Herstellung der Außenring des zweiten Lagers in einem ersten Verfahrensschritt zwar aufgenommen ist, allerdings nur in einem Isolationsteil, so dass das zweite Lager als im Isolationsteil aufgenommenes Loslager fungiert,**
**wobei erst später nach Einbau des Getriebes samt Flanschteil das zweite Lager nicht mehr Loslager, sondern als Festlager fungiert,**
insbesondere wobei das Isolationsteil in einer in Umfangsrichtung umlaufenden Innennut, insbesondere als Ringnut ausgeführte Innennut, des Gehäuseteils aufgenommen ist, eingeklipst ist und/oder eingesteckt ist,
insbesondere wobei das Isolationsteil aus einem Kunststoff gefertigt ist, insbesondere aus einem glasfaserverstärkten Kunststoff gefertigt ist.

4. Antrieb nach einem der vorangegangenen Ansprüche,
**dadurch gekennzeichnet, dass**
der Innenring des ersten Lagers auf dem Rotor aufgenommen, insbesondere aufgesteckt, ist, insbesondere und gegen eine Stufe angestellt ist oder gegen einen gegen eine am Rotor ausgeformte Stufe angestellten Mitnehmer gedrückt ist,
wobei die Bremsanordnung einen Magnetkörper aufweist, insbesondere aus einem ferromagnetischen Material,
**dadurch gekennzeichnet, dass**
wobei der Außenring des ersten Lagers im Magnetkörper der Bremsanordnung aufgenommen ist, insbesondere und gegen eine Stufe angestellt ist.

5. Antrieb nach einem der vorangegangenen Ansprüche,
**dadurch gekennzeichnet, dass**
das Isolationsteil axial zwischen dem Flanschteil und der Statorwicklung, insbesondere der mit dem Gehäuseteil drehfest verbundenen Statorwicklung, angeordnet ist wobei der vom Isolationsteil überdeckte, insbesondere auf die Drehachse des Rotors des Elektromotors bezogene, Radialabstandsbereich den von der Statorwicklung des Elektromotors überdeckten Radialabstandsbereich umfasst.

6. Antrieb nach einem der vorangegangenen Ansprüche,
**dadurch gekennzeichnet, dass**
der Außenring des zweiten Lagers gegen eine am Flanschteil ausgebildete Stufe angestellt ist,
wobei der Innenring des zweiten Lagers auf dem Rotor aufgenommen, insbesondere aufgesteckt, ist, insbesondere und gegen eine am Rotor ausgebildete Stufe angestellt ist.

7. Antrieb nach einem der vorangegangenen Ansprüche,
**dadurch gekennzeichnet, dass**
das Flanschteil mit einem Hohlrad einer Planetengetriebestufe eines mit dem Elektromotor verbundenen und vom Elektromotor angetriebenen Getriebes oder mit einem mit einem Hohlrad einer Planetengetriebestufe eines mit dem Elektromotor verbundenen und vom Elektromotor angetriebenen Getriebes verbundenen Teil, insbesondere Getriebegehäuseteil oder Lagerflansch, verbunden ist, insbesondere mittels Schrauben,
wobei der Rotor des Elektromotors mit einem insbesondere schrägverzahnten Sonnenrad der Planetengetriebestufe drehfest verbunden ist,
insbesondere wobei Planetenräder der Planetengetriebestufe sowohl mit dem Sonnenrad als auch mit dem Hohlrad im Eingriff sind,
insbesondere wobei im Lagerflansch ein Lager zur drehbaren Lagerung eines Planetenträgers der Planetengetriebestufe aufgenommen ist,
und/oder dass
der das Flanschteil berührende Oberflächenbereich des Außenrings des zweiten Lagers von dem das Isolationsteil berührenden Oberflächenbereich des Außenrings des zweiten Lagers in axialer Richtung beabstandet ist oder an ihn angrenzt, insbesondere nicht überlappt,
und/oder dass
im Flanschteil ein Wellendichtring aufgenommen ist, welcher das Flanschteil zum Rotor hin abdichtet,
insbesondere wobei eine Dichtlippe des Wellendichtrings auf einer Dichtfläche des Rotors läuft.

8. Antrieb nach einem der vorangegangenen Ansprüche,
**dadurch gekennzeichnet, dass**
der Magnetkörper in einem mit dem Gehäuseteil fest verbundenen Aufnahmeteil aufgenommen ist oder im Gehäuseteil aufgenommen ist,
wobei der Magnetkörper in axialer Richtung, insbesondere also parallel zur Richtung der Drehachse des Rotors, verschiebbar angeordnet ist und mit einem ersten Drehmomentstützteil verbunden ist, insbesondere mittels zweiter, insbesondere in Umfangsrichtung regelmäßig voneinander beabstandeter, Schrauben (42),
wobei das erste Drehmomentstützteil mit dem Aufnahmeteil und/oder mit dem Gehäuseteil verbunden ist, insbesondere mittels erster, insbesondere in Umfangsrichtung regelmäßig voneinander beabstandeter, Schrauben (42).

9. Antrieb nach einem der vorangegangenen Ansprüche,
**dadurch gekennzeichnet, dass**
das erste Drehmomentstützteil als Balg, insbesondere Metallbalg, ausgeführt ist, wobei der
das Aufnahmeteil berührende Bereich des ersten Drehmomentstützteils in axialer Richtung beabstandet ist von dem den Magnetkörper berührenden Bereich, insbesondere der auf kleinerem Radialabstand angeordnet ist als der das Aufnahmeteil berührende Bereich oder dass
das erste Drehmomentstützteil, insbesondere Metallblech, derart als Blechteil ausgeführt ist, dass der das Aufnahmeteil berührende Bereich des ersten Drehmomentstützteils auf derselben axialen Position angeordnet ist wie der von dem Magnetkörper berührte Bereich des Drehmomentstützteils, insbesondere der auf kleinerem Radialabstand angeordnet ist als der das Aufnahmeteil berührende Bereich.

10. Antrieb nach einem der vorangegangenen Ansprüche,
**dadurch gekennzeichnet, dass**
eine Ankerscheibe mit dem Mitnehmer drehfest aber in axialer Richtung verschiebbar angeordnet ist,
insbesondere wobei ein zwischen dem Mitnehmer und der Ankerscheibe angeordnetes Federelement, insbesondere ein mittels erster Verbindungselemente mit dem Mitnehmer und mittels zweiter Verbindungselemente mit der Ankerscheibe verbundenes Federblech, eine auf die Ankerscheibe wirkende, zum Mitnehmer hin gerichtete Federkraft erzeugt,
insbesondere wobei das Federelement am Mitnehmer abgestützt ist,
insbesondere wobei die Verbindungselemente als Nieten ausgeführt sind,
und/oder dass
im Magnetkörper eine Spule aufgenommen ist, insbesondere in radialer Richtung zwischen dem Innenring des Magnetkörpers und dem Außenring des Magnetkörpers,
und/oder dass
der Magnetkörper einen Außenring und einen Innenring aufweist,
wobei zwischen dem Innenring und dem Außenring ein Dauermagnet angeordnet ist, insbesondere wobei in axialer Richtung zwischen dem Innenring und dem Außenring ein Dauermagnet angeordnet ist,
und/oder dass
der Außenring des ersten Lagers gegen eine am Magnetkörper, insbesondere am Innenring des Magnetkörpers, ausgeformte Stufe angestellt ist,
wobei der Innenring des ersten Lagers gegen eine an der Welle ausgeformte Stufe angestellt ist.

11. Antrieb nach einem der vorangegangenen Ansprüche,
**dadurch gekennzeichnet, dass**
bei Bestromung der Spule der die Ankerscheibe durchdringende Magnetfluss vermindert ist, insbesondere im Vergleich zur Nichtbestromung der Spule,
und/oder dass
der Außenring des Magnetkörpers im Aufnahmeteil axial verschiebbar angeordnet ist,
und/oder dass
die Rotorwelle eines Winkelsensors mit dem Rotor drehfest verbunden ist und das Gehäuse des Winkelsensors mit einem ersten Bereich des zweiten Drehmomentstützteils verbunden ist, wobei ein zweiter Bereich des zweiten Drehmomentstützteils mit dem Innenring des Magnetkörpers verbunden ist, insbesondere zusammen mit einem Hilfsblech, mittels einer Schraube an den Innenring des Magnetkörpers angedrückt ist,
insbesondere wobei der zweite Bereich auf größerem Radialabstand angeordnet ist als der erste Bereich, insbesondere wobei der zweite Bereich radial weiter außen angeordnet ist als der erste Bereich,
und/oder dass
der vom ersten Drehmomentstützteil überdeckte Radialabstandsbereich beabstandet ist und/oder radial außerhalb des vom zweiten Drehmomentstützteil überdeckten Radialabstandsbereichs.

12. Antrieb nach einem der vorangegangenen Ansprüche,
**dadurch gekennzeichnet, dass**
das erste Drehmomentstützteil einen Innenringbereich, einen Außenringbereich und den Innenringbereich mit dem Außenringbereich verbindende, insbesondere in Umfangsrichtung regelmäßig voneinander beabstandete, Stege aufweist,
wobei der Innenringbereich am Innenring des Magnetkörpers anliegt und der Außenringbereich am Aufnahmeteil oder am Gehäuseteil anliegt,
wobei entweder
- der größte Umfangswinkelwert des von einem jeweiligen Steg bei einem Radialabstand überdeckte Umfangswinkelbereichs mit zunehmendem Radialabstand monoton, insbesondere streng monoton, zunimmt, insbesondere also in Umfangsrichtung anwächst
und der kleinste Umfangswinkelwert dieses Umfangswinkelbereichs mit zunehmendem Radialabstand monoton, insbesondere streng monoton, zunimmt, insbesondere also in Umfangsrichtung anwächst,
oder
- der größte Umfangswinkelwert des von einem jeweiligen Steg bei einem Radialabstand überdeckte Umfangswinkelbereichs mit zunehmendem Radialabstand monoton, insbesondere streng monoton, abnimmt,
und der kleinste Umfangswinkelwert dieses Umfangswinkelbereichs mit zunehmendem Radialabstand monoton, insbesondere streng monoton, abnimmt.

13. Antrieb nach einem der vorangegangenen Ansprüche,
**dadurch gekennzeichnet, dass**
der am Aufnahmeteil abgestützte Balg den Innenring des Magnetkörpers, insbesondere die am Innenring des Magnetkörpers ausgeformte Stufe, derart auf den Außenring des ersten Lagers drückt, dass der Innenring des ersten Lagers den Mitnehmer gegen die am Rotor ausgeformte Stufe andrückt
oder dass
ein am Aufnahmeteil, am Gehäuseteil oder an einem mit dem Aufnahmeteil oder Gehäuseteil fest verbundenen Ring abgestütztes Federelement den Innenring des Magnetkörpers,
insbesondere die am Innenring des Magnetkörpers ausgeformte Stufe, derart auf den Außenring des ersten Lagers drückt, dass der Innenring des ersten Lagers den Mitnehmer gegen die am Rotor ausgeformte Stufe andrückt.

14. Antrieb nach einem der vorangegangenen Ansprüche,
**dadurch gekennzeichnet, dass**
der Außenring des zweiten Lagers insbesondere bei noch nicht mit dem Gehäuseteil verbundenen Flanschteil und Getriebe, in einem Isolationsteil, insbesondere in einem aus glasfaserverstärktem Kunststoff hergestellten Isolationsteil, aufgenommen ist,
wobei das Isolationsteil im Gehäuseteil aufgenommen ist, insbesondere in einer in Umfangsrichtung umlaufenden Ringnut des Gehäuseteils aufgenommen ist,
wobei das Flanschteil auf der vom ersten Lager abgewandten Seite des Isolationsteils angeordnet ist.

## Claims

1. A method for producing a drive, having an electric motor with a braking arrangement, in particular according to one of claims 3 to 14,
wherein the electric motor has a rotor borne rotatably by way of a first bearing and a second bearing, and a housing part,
wherein the first bearing has an inner ring and an outer ring,
wherein the outer ring of the first bearing is received in a magnet body of the braking arrangement, in particular as a fixed bearing,
in particular wherein the magnet body is received in the housing part, or in a receiving part connected to the housing part, non-rotatably in relation to the housing part and axially displaceably in relation to the housing part,
wherein the second bearing has an inner ring and an outer ring,
wherein the outer ring of the second bearing is received in an insulating part, in particular made of an electrically and thermally insulating material, which is received in the housing part,
wherein the second bearing is arranged as a movable bearing,
wherein the outer ring of the second bearing is arranged axially displaceably in relation to the insulating part,
in particular wherein the insulating part is received in, is clipped into and/or is inserted into an inner groove which runs around in the peripheral direction, in particular an inner groove embodied as an annular groove, of the housing part,
in particular wherein the insulating part is manufactured from a plastics material, in particular is manufactured from a glass-fibre-reinforced plastics material,
wherein
- in a first method step, functional testing of the electric motor is carried out, in particular therefore the electric motor is operated in no-load operation, wherein the second bearing acts as a movable bearing received in the insulating part, in particular wherein the first bearing acts as a fixed bearing received in the magnet body
- in a second method step chronologically succeeding the first method step, a gear unit is connected to the electric motor, wherein the second bearing acts as a fixed bearing received in the flange part,
wherein the outer ring of the second bearing is partially inserted into a cutout in a flange part connected to the gear unit and is adjusted against a step of the flange part.

2. A method according to claim 1,
**characterised in that**
in the first method step the angular velocity and/or approached angular positions is/are checked by means of an angle sensor arranged integrated in the electric motor,
with in the second method step by means of the angle sensor angular positions and/or angular velocities being detected and being used for controlling the angular position of the rotor of the electric motor.

3. A drive, in particular produced according to a method according to claim 1 or 2,
wherein the drive has an electric motor with a braking arrangement,
wherein the electric motor has a rotor borne rotatably by way of a first bearing and a second bearing, and a housing part,
wherein the first bearing has an inner ring and an outer ring,
wherein the outer ring of the first bearing is received in a magnet body of the braking arrangement,
wherein the second bearing has an inner ring and an outer ring,
wherein the outer ring of the second bearing is received in an insulating part, in particular made of an electrically and thermally insulating material, which is received in the housing part,
wherein
the outer ring of the second bearing is partially inserted into a cutout in the insulating part and is partially inserted into a cutout in a flange part,
wherein a first partial region of the region covered by the outer ring of the second bearing in the axial direction contacts the flange part,
wherein a second partial region of the region covered by the outer ring of the second bearing in the axial direction contacts the insulating part,
wherein the first partial region is spaced apart from the second partial region or adjoins it, but the first partial region does not overlap with the second partial region,
wherein the outer ring of the second bearing is arranged axially displaceably in relation to the insulating part,
wherein during production the outer ring of the second bearing is indeed received in a first method step, but only in an insulating part, so that the second bearing acts as a movable bearing received in the insulating part,
wherein only later once the gear unit plus flange part has been installed does the second bearing no longer act [as a] movable bearing, but as a fixed bearing,
in particular wherein the insulating part is received in, is clipped into and/or is inserted into an inner groove which runs around in the peripheral direction, in particular an inner groove embodied as an annular groove, of the housing part,
in particular wherein the insulating part is manufactured from a plastics material, in particular is manufactured from a glass-fibre-reinforced plastics material.

4. A drive according to one of the preceding claims,
**characterised in that**
the inner ring of the first bearing is received, in particular mounted, on the rotor, in particular and is adjusted against a step or is pressed against an entraining element which is adjusted against a step formed on the rotor,
with the braking arrangement having a magnet body, in particular one made of a ferromagnetic material,
**characterised in that**
with the outer ring of the first bearing being received in the magnet body of the braking arrangement, in particular and being adjusted against a step.

5. A drive according to one of the preceding claims,
**characterised in that**
the insulating part is arranged axially between the flange part and the stator winding, in particular the stator winding connected non-rotatably to the housing part,
with the radial distance region covered by the insulating part, in particular the one related to the axis of rotation of the rotor of the electric motor, comprising the radial distance region covered by the stator winding of the electric motor.

6. A drive according to one of the preceding claims,
**characterised in that**
the outer ring of the second bearing is adjusted against a step formed on the flange part,
with the inner ring of the second bearing being received, in particular mounted, on the rotor, in particular and being adjusted against a step formed on the rotor.

7. A drive according to one of the preceding claims,
**characterised in that**
the flange part is connected, in particular by means of screws, to a ring gear of a planetary gear stage of a gear unit connected to the electric motor and driven by the electric motor or to a part, in particular gear unit housing part or bearing flange, connected to a ring gear of a planetary gear stage of a gear unit connected to the electric motor and driven by the electric motor,
with the rotor of the electric motor being connected non-rotatably to an in particular helically-geared sun gear of the planetary gear stage,
in particular with planet wheels of the planetary gear stage meshing both with the sun gear and with the ring gear,
in particular with a bearing for rotatably bearing a pinion cage of the planetary gear stage being received in the bearing flange,
and/or **in that**
the surface region, contacting the flange part, of the outer ring of the second bearing is spaced apart from or adjoins, in particular does not overlap, the surface region, contacting the insulating part, of the outer ring of the second bearing in the axial direction,
and/or **in that**
a shaft sealing ring is received in the flange part, which shaft sealing ring seals off the flange part towards the rotor,
in particular with a sealing lip of the shaft sealing ring running on a sealing face of the rotor.

8. A drive according to one of the preceding claims,
**characterised in that**
the magnet body is received in a receiving part connected in a fixed manner to the housing part, or is received in the housing part,
with the magnet body being arranged displaceably in the axial direction, in particular therefore parallel to the direction of the axis of rotation of the rotor, and being connected to a first torque support part, in particular by means of second screws (42) which are in particular regularly spaced apart from each other in the circumferential direction,
with the first torque support part being connected to the receiving part and/or to the housing part, in particular by means of first screws (42) which are in particular regularly spaced apart from each other in the circumferential direction.

9. A drive according to one of the preceding claims,
**characterised in that**
the first torque support part is embodied as a bellows, in particular metal bellows, with that region of the first torque support part which contacts the receiving part being spaced apart in the axial direction from the region which contacts the magnet body, in particular which is arranged at a shorter radial distance than the region which contacts the receiving part
or **in that**
the first torque support part, in particular metal sheet, is embodied as a sheet-metal part in such a way that the region of the first torque support part which contacts the receiving part is arranged at the same axial position as the region of the torque support part which is contacted by the magnet body, in particular which is arranged at a shorter radial distance than the region which contacts the receiving part.

10. A drive according to one of the preceding claims,
**characterised in that**
an armature disc is arranged with the entraining element non-rotatably but displaceably in the axial direction,
in particular with a spring element arranged between the entraining element and the armature disc, in particular a spring plate connected by means of first connecting elements to the entraining element and by means of second connecting elements to the armature disc, generating a spring force acting on the armature disc and directed towards the entraining element,
in particular with the spring element being supported on the entraining element,
in particular with the connecting elements being embodied as rivets,
and/or **in that**
a coil is received in the magnet body, in particular in the radial direction between the inner ring of the magnet body and the outer ring of the magnet body,
and/or **in that**
the magnet body has an outer ring and an inner ring,
with a permanent magnet being arranged between the inner ring and the outer ring,
in particular with a permanent magnet being arranged in the axial direction between the inner ring and the outer ring,
and/or **in that**
the outer ring of the first bearing is adjusted against a step formed on the magnet body, in particular on the inner ring of the magnet body,
with the inner ring of the first bearing being adjusted against a step formed on the shaft.

11. A drive according to one of the preceding claims,
**characterised in that**
when the coil is energised the magnetic flux penetrating the armature disc is reduced, in particular compared with when the coil is not energised,
and/or **in that**
the outer ring of the magnet body is arranged axially displaceably in the receiving part,
and/or **in that**
the rotor shaft of an angle sensor is connected non-rotatably to the rotor and the housing of the angle sensor is connected to a first region of the second torque support part, with a second region of the second torque support part being connected to the inner ring of the magnet body, in particular together with an auxiliary plate, being pressed against the inner ring of the magnet body by means of a screw,
in particular with the second region being arranged at a greater radial distance than the first region, in particular with the second region being arranged radially farther to the outside than the first region,
and/or **in that**
the radial distance region covered by the first torque support part is spaced apart and/or radially outside the radial distance region covered by the second torque support part.

12. A drive according to one of the preceding claims,
**characterised in that**
the first torque support part has an inner-ring region, an outer-ring region, and lands, in particular regularly spaced apart from each other in the circumferential direction, connecting the inner-ring region to the outer-ring region,
with the inner-ring region lying against the inner ring of the magnet body and the outer-ring region lying against the receiving part or against the housing part,
with either
- the greatest angle-at-circumference value of the angle-at-circumference region covered by a respective land at a radial distance increasing monotonically, in particular strictly monotonically, with increasing radial distance, in particular therefore increasing in the circumferential direction
and the smallest angle-at-circumference value of this angle-at-circumference region increasing monotonically, in particular strictly monotonically, with increasing radial distance, in particular therefore increasing in the circumferential direction,
or
- the greatest angle-at-circumference value of the angle-at-circumference region covered by a respective land at a radial distance decreasing monotonically, in particular strictly monotonically, with increasing radial distance,
and the smallest angle-at-circumference value of this angle-at-circumference region decreasing monotonically, in particular strictly monotonically, with increasing radial distance.

13. A drive according to one of the preceding claims,
**characterised in that**
the bellows supported on the receiving part presses the inner ring of the magnet body, in particular the step formed on the inner ring of the magnet body, onto the outer ring of the first bearing in such a way that the inner ring of the first bearing presses the entraining element against the step formed on the rotor
or **in that**
a spring element supported on the receiving part, on the housing part or on a ring connected in a fixed manner to the receiving part or housing part presses the inner ring of the magnet body, in particular the step formed on the inner ring of the magnet body, onto the outer ring of the first bearing in such a way that the inner ring of the first bearing presses the entraining element against the step formed on the rotor.

14. A drive according to one of the preceding claims,
**characterised in that**
the outer ring of the second bearing, in particular when the flange part and gear unit are not yet connected to the housing part, is received in an insulating part, in particular in an insulating part produced from glass-fibre-reinforced plastics material,
with the insulating part being received in the housing part, in particular being received in an annular groove in the housing part which runs around in the peripheral direction,
with the flange part being arranged on that side of the insulating part which is remote from the first bearing.

## Revendications

1. Procédé de fabrication d'un entraînement comprenant un moteur électrique avec un système de freinage, en particulier selon l'une quelconque des revendications 3 à 14, le moteur électrique présentant un rotor monté rotatif par l'intermédiaire d'un premier palier et d'un second palier et une partie carter,
le premier palier présentant une bague intérieure et une bague extérieure,
la bague extérieure du premier palier étant logée dans un corps magnétique du système de freinage, en particulier sous la forme d'un palier fixe,
le corps magnétique étant en particulier logé dans la partie carter ou dans une partie logement reliée à la partie carter, de manière à être solidaire en rotation par rapport à la partie carter et de manière à pouvoir être déplacé axialement par rapport à la partie carter,
le second palier présentant une bague intérieure et une bague extérieure,
la bague extérieure du second palier étant logée dans une partie isolation, en particulier constituée d'un matériau électriquement et thermiquement isolant, logée dans la partie carter,
le second palier étant agencé sous la forme d'un palier libre, la bague extérieure du second palier étant agencée de manière à pouvoir être déplacée axialement par rapport à la partie isolation,
la partie isolation étant en particulier logée, clipsée et/ou insérée dans une rainure intérieure s'étendant dans le sens circonférentiel, en particulier une rainure intérieure, réalisée sous la forme d'une rainure annulaire, de la partie carter,
la partie isolation étant en particulier fabriquée à partir d'un plastique, en particulier à partir d'un plastique renforcé de fibres de verre,
- dans une première étape de procédé, un test de fonctionnement du moteur électrique étant mis en œuvre, le moteur électrique étant en particulier amené à fonctionner au ralenti, le second palier servant de palier libre logé dans la partie isolation, en particulier le premier palier servant de palier fixe logé dans le corps magnétique
- dans une seconde étape de procédé succédant à la première étape de procédé, une transmission étant reliée au moteur électrique, le second palier servant de palier fixe logé dans une partie bride,
la bague extérieure du second palier étant partiellement insérée dans un évidement d'une partie bride reliée à la transmission et étant appliquée contre un étage de la partie bride.

2. Procédé selon la revendication 1,
**caractérisé en ce que**
dans la première étape du procédé, la vitesse angulaire et/ou les positions angulaires atteintes sont vérifiées au moyen d'un capteur d'angle intégré dans le moteur électrique,
dans la seconde étape de procédé, des positions angulaires et/ou des vitesses angulaires sont détectées au moyen du capteur d'angle et utilisées pour réguler la position angulaire du rotor du moteur électrique.

3. Entraînement, en particulier fabriqué selon un procédé selon la revendication 1 ou 2,
l'entraînement comprenant un moteur électrique avec un système de freinage,
le moteur électrique présentant un rotor monté rotatif par l'intermédiaire d'un premier palier et d'un second palier et une partie carter,
le premier palier présentant une bague intérieure et une bague extérieure,
la bague extérieure du premier palier étant logée dans un corps magnétique du système de freinage,
le second palier présentant une bague intérieure et une bague extérieure,
la bague extérieure du second palier étant logée dans une partie isolation, en particulier constituée d'un matériau électriquement et thermiquement isolant, logée dans la partie carter,
la bague extérieure du second palier étant partiellement insérée dans un évidement de la partie isolation et partiellement insérée dans un évidement d'une partie bride, une première sous-région de la région recouverte par la bague extérieure du second palier dans la direction axiale étant en contact avec la partie bride,
une seconde sous-région de la région recouverte par la bague extérieure du second palier dans la direction axiale étant en contact avec la partie isolation,
la première sous-région étant espacée par rapport à la seconde sous-région ou étant adjacente à celle-ci, mais la première sous-région ne chevauchant pas la seconde sous-région,
la bague extérieure du second palier étant agencée de manière à pouvoir être déplacée axialement par rapport à la partie isolation,
lors de la fabrication, la bague extérieure du second palier étant logée lors d'une première étape de procédé, mais seulement dans une partie isolation, de sorte que le second palier sert de palier libre logé dans la partie isolation,
le second palier ne servant plus de palier libre, mais plutôt de palier fixe, qu'après l'installation de la transmission et de la partie bride,
la partie isolation étant en particulier logée, clipsée et/ou insérée dans une rainure intérieure s'étendant dans le sens circonférentiel, en particulier une rainure intérieure, réalisée sous la forme d'une rainure annulaire, de la partie carter,
la partie isolation étant en particulier fabriquée à partir d'un plastique, en particulier étant fabriquée à partir d'un plastique renforcé de fibres de verre,

4. Entraînement selon l'une quelconque des revendications précédentes,
**caractérisé en ce que**
la bague intérieure du premier palier est logée sur le rotor, en particulier est enfichée, en particulier est appliquée contre un étage ou est pressée contre un entraineur appliqué contre un étage formé au niveau du rotor,
le système de freinage présentant un corps magnétique, en particulier constitué d'un matériau ferromagnétique,
**caractérisé en ce que**
la bague extérieure du premier palier est logée dans le corps magnétique du système de freinage, en particulier est appliquée contre un étage.

5. Entraînement selon l'une quelconque des revendications précédentes,
**caractérisé en ce que**
la partie isolation est agencée axialement entre la partie bride et l'enroulement de stator, en particulier l'enroulement de stator relié de manière solidaire en rotation à la partie carter
la région d'espacement radial recouverte par la partie isolation, en particulier par rapport à l'axe de rotation du rotor du moteur électrique, comprenant la région d'espacement radial recouverte par l'enroulement de stator du moteur électrique.

6. Entraînement selon l'une quelconque des revendications précédentes,
**caractérisé en ce que**
la bague extérieure du second palier est appliquée contre un étage réalisé au niveau de la partie bride,
la bague intérieure du second palier étant logée sur le rotor, en particulier enfichée, en particulier appliquée contre un étage réalisé au niveau du rotor.

7. Entraînement selon l'une quelconque des revendications précédentes,
**caractérisé en ce que**
la partie bride est reliée, en particulier au moyen de vis, à une couronne d'un étage de transmission planétaire d'une transmission reliée au moteur électrique et entraînée par le moteur électrique ou à une partie, en particulier une partie carter de transmission ou une bride de palier, reliée à une couronne d'un étage de transmission planétaire d'une transmission reliée au moteur électrique et entraînée par le moteur électrique,
le rotor du moteur électrique étant relié de manière solidaire en rotation à une roue solaire, en particulier à denture hélicoïdale, de l'étage de transmission planétaire, des roues planétaires de l'étage de transmission planétaire étant en particulier en prise à la fois avec la roue solaire et avec la couronne,
un palier qui permet une mise sur palier rotative d'un porte-satellites de l'étage de transmission planétaire étant en particulier logé dans la bride de palier,
et/ou **en ce que**
la région de surface de la bague extérieure du second palier en contact avec la partie bride est espacée dans la direction axiale par rapport à la région de surface de la bague extérieure du second palier en contact avec la partie isolation ou est adjacente à celle-ci, en particulier ne la chevauche pas,
et/ou **en ce que**
une bague d'étanchéité d'arbre qui rend étanche la partie bride par rapport au rotor est logée dans la partie bride,
une lèvre d'étanchéité de la bague d'étanchéité d'arbre passant en particulier sur une surface d'étanchéité du rotor.

8. Entraînement selon l'une quelconque des revendications précédentes, **caractérisé en ce que**
le corps magnétique est logé dans une partie logement reliée de manière fixe à la partie carter ou est logé dans la partie carter,
le corps magnétique étant agencé de manière à pouvoir être déplacé dans la direction axiale, en particulier parallèlement à la direction de l'axe de rotation du rotor, et étant relié à une première partie support de couple, en particulier au moyen de secondes vis (42), en particulier régulièrement espacées les unes des autres dans la direction circonférentielle,
la première partie support de couple étant reliée à la partie logement et/ou à la partie carter, en particulier au moyen de premières vis (42), en particulier régulièrement espacées les unes des autres dans la direction circonférentielle.

9. Entraînement selon l'une quelconque des revendications précédentes, **caractérisé en ce que**
la première partie support de couple est réalisée sous la forme d'un soufflet, en particulier d'un soufflet métallique, la région de la première partie support de couple en contact avec la partie logement étant espacée dans la direction axiale par rapport à la région en contact avec le corps magnétique, en particulier étant agencée à une distance radiale inférieure à celle de la région en contact avec la partie logement ou **en ce que**
la première partie support de couple, en particulier une tôle métallique, est réalisée sous la forme d'une pièce en tôle de telle manière que,
la région de la première partie support de couple en contact avec la partie logement est agencée sur la même position axiale que la région de la partie support de couple en contact avec le corps magnétique, en particulier que celle agencée à une distance radiale inférieure à celle de la région en contact avec la partie logement.

10. Entraînement selon l'une quelconque des revendications précédentes, **caractérisé en ce que**
un disque d'induit est agencé de manière solidaire en rotation avec l'entraîneur mais de manière à pouvoir être déplacé dans la direction axiale,
un élément élastique agencé entre l'entraîneur et le disque d'induit, en particulier une tôle élastique reliée à l'entraîneur au moyen de premiers éléments de liaison et au disque d'induit au moyen de seconds éléments de liaison, produisant en particulier une force élastique agissant sur le disque d'induit et dirigée vers l'entraîneur,
l'élément élastique étant en particulier supporté au niveau de l'entraîneur, les éléments de liaison étant en particulier réalisés sous forme de rivets,
et/ou **en ce que**
une bobine est logée dans le corps magnétique, en particulier dans la direction radiale entre la bague intérieure du corps magnétique et la bague extérieure du corps magnétique,
et/ou **en ce que**
le corps magnétique présente une bague extérieure et une bague intérieure,
un aimant permanent étant agencé entre la bague intérieure et la bague extérieure, un aimant permanent étant en particulier agencé entre la bague intérieure et la bague extérieure dans la direction axiale,
et/ou **en ce que**
la bague extérieure du premier palier est appliquée contre un étage formé au niveau du corps magnétique, en particulier au niveau de la bague intérieure du corps magnétique,
la bague intérieure du premier palier étant en particulier appliquée contre un étage formé au niveau de l'arbre.

11. Entraînement selon l'une quelconque des revendications précédentes, **caractérisé en ce que**
lorsque la bobine est alimentée en courant, le flux magnétique traversant le disque d'induit est réduit,
en particulier par rapport à la non-alimentation de la bobine,
et/ou **en ce que**
la bague extérieure du corps magnétique est agencée de manière à pouvoir être déplacée axialement dans la partie logement, et/ou **en ce que**
l'arbre de rotor d'un capteur d'angle est relié de manière solidaire en rotation au rotor et le carter du capteur d'angle est relié à une première région de la seconde partie support de couple, une seconde région de la seconde partie support de couple étant reliée à la bague intérieure du corps magnétique, en particulier étant pressée, en même temps qu'une tôle auxiliaire, contre la bague intérieure du corps magnétique au moyen d'une vis,
la seconde région étant en particulier agencée à une distance radiale supérieure à celle de la première région, la seconde région étant en particulier agencée radialement plus à l'extérieur que ne l'est la première région,
et/ou **en ce que**
la région d'espacement radial recouverte par la première partie support de couple est espacée par rapport à la région d'espacement radial recouverte par la seconde partie support de couple et/ou se trouve radialement à l'extérieur de celle-ci.

12. Entraînement selon l'une quelconque des revendications précédentes, **caractérisé en ce que**
la première partie support de couple présente une région de bague intérieure, une région de bague extérieure et des barrettes reliant la région de bague intérieure à la région de bague extérieure, en particulier des barrettes régulièrement espacées les unes des autres dans la direction circonférentielle,
la région de bague intérieure jouxtant la bague intérieure du corps magnétique et la région de bague extérieure jouxtant la partie logement ou la partie carter,
- la plus grande valeur d'angle circonférentiel de la plage d'angle circonférentiel recouverte par une barrette respective à une distance radiale augmentant de manière monotone, en particulier de manière strictement monotone, en particulier augmentant dans la direction circonférentielle, à mesure que la distance radiale augmente et la plus petite valeur d'angle circonférentiel de ladite plage d'angle circonférentiel augmentant de manière monotone, en particulier de manière strictement monotone, en particulier augmentant dans la direction circonférentielle, à mesure que la distance radiale augmente,
ou
- la plus grande valeur d'angle circonférentiel de la plage d'angle circonférentiel recouverte par une barrette respective à une distance radiale diminuant de manière monotone, en particulier de manière strictement monotone, à mesure que la distance radiale augmente, et la plus petite valeur d'angle circonférentiel de ladite plage d'angle circonférentiel diminuant de manière monotone, en particulier de manière strictement monotone, à mesure que la distance radiale augmente.

13. Entraînement selon l'une quelconque des revendications précédentes, **caractérisé en ce que**
le soufflet appuyé sur la partie logement presse la bague intérieure du corps magnétique, en particulier l'étage formé au niveau de la bague intérieure du corps magnétique, contre la bague extérieure du premier palier de telle manière que la bague intérieure du premier palier presse l'entraîneur contre l'étage formé au niveau du rotor ou **en ce que**
un élément élastique appuyé sur la partie logement, sur la partie carter ou sur une bague reliée de manière fixe à la partie logement ou à la partie carter presse la bague intérieure du corps magnétique, en particulier l'étage formé au niveau de la bague intérieure du corps magnétique, contre la bague extérieure du premier palier de telle manière que la bague intérieure du premier palier presse l'entraîneur contre l'étage formé au niveau du rotor.

14. Entraînement selon l'une quelconque des revendications précédentes, **caractérisé en ce que**
la bague extérieure du second palier, en particulier lorsque la partie bride et la transmission ne sont pas encore reliées à la partie carter, est logée dans une partie isolation, en particulier dans une partie isolation fabriquée en plastique renforcé de fibres de verre,
la partie isolation étant logée dans la partie carter, en particulier dans une rainure annulaire, s'étendant dans le sens circonférentiel, de la partie carter,
la partie bride étant agencée sur le côté de la partie isolation qui est opposé au premier palier.
